# EUROPÄISCHE PATENTSCHRIFT

(11) **EP 1 603 483 B1**
(45) Veröffentlichungstag und Bekanntmachung des Hinweises auf die Patenterteilung: **24.09.2008**
(21) Anmeldenummer: 04717103.8
(22) Anmeldetag: 04.03.2004
(51) Int. Cl.: A61C 13/10

(54) **VERFAHREN ZUR HERSTELLUNG EINER ZAHNERSATZPROTHESE UND KUNSTZAHN DAFÜR**
METHOD FOR PRODUCING A DENTAL PROSTHESIS AND ARTIFICIAL TOOTH THEREFOR
PROCEDE DE PRODUCTION D'UNE PROTHESE DENTAIRE ET DENT ARTIFICIELLE ASSOCIEE

(30) Priorität: 04.03.2003 EP 03004741
(43) Veröffentlichungstag der Anmeldung: 14.12.2005
(73) Patentinhaber: Merz Dental GmbH, 24321 Lütjenburg (DE)
(72) Erfinder: KOLLER, Martin, 24321 Klamp/Vogelsdorf (DE); BECKER, Frank, 24321 Lütjenburg (DE)
(74) Vertreter: Glawe, Delfs, Moll
(86) Internationale Anmeldenummer: PCT/EP2004/002217
(87) Internationale Veröffentlichungsnummer: WO 2004/078060

(56) Entgegenhaltungen:
- CH-A- 495 747
- DE-U- 8 513 665
- FR-A- 628 698
- US-A- 628 345
- US-A- 2 600 496

## Beschreibung

Die Erfindung betrifft ein Verfahren zur Herstellung einer Zahnprothese und einem Kunstzahn dafür mit einer als Bissfläche ausgebildeten Oberseite und einer Unterseite, die zum Einsetzen in ein Aufnahmebett der Zahnprothese ausgebildet ist.

Zahnprothesen bestehen üblicherweise aus einem Aufnahmebett und mehreren in dieses eingesetzte Kunstzähnen. Eine Schwierigkeit besteht darin, die Kunstzähne an der richtigen Stelle in dem Aufnahmebett zu positionieren und dort sicher zu halten. Das Aufnahmebett besteht üblicherweise aus einem wachsartigen Material. Dies ermöglicht es, die Kunstzähne beim Einsetzen in das Aufnahmebett hinein zu drücken, wobei das Wachs aufgrund seiner Plastizität zurückgedrängt wird und Platz für den Kunstzahn macht. Die Plastizität des Waches hält den Kunstzahn fest. Die Sicherheit mit der eine genaue Positionierung des Kunstzahns gelingt, hängt in erheblichem Umfang von der Gestaltung der Unterseite des Kunstzahns ab. Bei einer planen Ausgestaltung der Unterseite ist eine genaue Positionierung verhältnismäßig einfach. Häufig ist jedoch aus Gründen der Festigkeit oder der Anatomie die Unterseite des Kunstzahns nicht plan ausgeführt, sondern sie weist Schrägen auf. Die Schrägen führen dazu, dass die Kunstzähne beim Aufbringen von Druckkräften sich in unerwünschter Weise quer zur Richtung der Schräge bewegen. Eine genaue Positionierung ist damit nur schwer erreichbar.

Eine Fehlpositionierung im Wachsbett wirkt sich unmittelbar negativ auf die Positionsgenauigkeit des endgültigen Zahnersatzes aus. Denn der im Wachsmaterial verrutschte Zahn wird dementsprechend bei der Weiterverarbeitung in der bekannten Vorwalltechnik an der falschen Stelle gehalten und verbleibt auch an dieser falschen Stelle, wenn das Wachsmaterial abgeschmolzen wird und in einem späteren Schritt durch das Fixierungsmaterial des endgültigen Zahnersatzes ersetzt wird. Der endgültige Zahnersatz weist damit dauerhaft den durch die Fehlpositionierung im Wachsbett hervorgerufenen Fehler auf.

Aus einem anderen Zusammenhang, nämlich in Bezug auf Zahnersatz zur endgültigen Versorgung sind Kunstzähne aus dem Stand der Technik bekannt, die an ihrer Unterseite eine Öffnung zur Befestigung in dem endgültigen Zahnersatz aufweisen. Ein in dem Fixiermaterial des endgültigen Zahnersatzes befestigtes metallisches Verstärkungselement greift in die hinterschnittene Öffnung und sichert den Zahn damit in dem Fixiermaterial (US-A-2 600 496, US-A-200 284). Weiterhin ist ein endgültiger Zahnersatz bekannt, bei dem der Kunstzahn aus einem Verbund aus einem metallischen Träger und einem keramischen Körper besteht. Das Fixierungsmaterial ist Kautschuk oder Cellulitematerial, in das der Zahn dauerhaft eingesetzt wird. Zur Gewährleistung einer ausreichenden Verbindungssicherheit ist noch ein gesondertes Zwischenmaterial erforderlich, das niedrigschmelzend ist und mittels einer Überlaufrille an einem Ende einer Zahnreihe eingebracht wird und über diese von Zahn zu Zahn weiter fließt (US-A-628 345).

Dokument FR 628698 offenbart ein Verfahren zum Herstellen einer Zahnprothese.

Weiter ist es bekannt, an der Unterseite des Kunstzahns Retentionsrillen mittels eines speziellen Fräsers herzustellen (DE-U-85 13 665). Die mittels dieses Fräsers hergestellten Rille weisen außerordentlich kleine Abmessungen auf, die nur durch sehr flüssiges Fixiermaterial ausgefüllt werden. Wachsmaterial dringt nur schlecht oder gar nicht in diese kleinen Rillen ein.

Der Erfindung liegt die Aufgabe zugrunde, ein Herstellungsverfahren und einen Kunstzahn zu schaffen, mit dem eine einfachere und genauere Positionierung des Kunstzahns ermöglicht ist.

Die Erfindung löst die Aufgabe durch die Merkmale der unabhängigen Ansprüche. Vorteilhafte Weiterbildungen sind Gegenstand der abhängigen Ansprüche.

Erfindungsgemäß ist bei einem Verfahren zur Herstellung einer Zahnersatzprothese mit den Schritten Herstellen einer Wachsprothese umfassend Kunstzähne und ein Aufnahmebett zur Aufstellung der Kunstzähne durch Einsetzen der Kunstzähne in das Aufnahmebett an anatomisch richtiger Position, Herstellen einer Negativform der Wachsprothese mittels eines Dubliermediums, das zur positionswahrenden Aufnahme der Kunstzähne ausgebildet ist, Entfernen des Aufnahmebettes, Einbringen eines Fixierungsmaterials in die Negativform, Aushärten des Fixierungsmaterials, wobei die Kunstzähne mit ihrem Unterteil in das Fixierungsmaterial dauerhaft eingebettet werden, vorgesehen, dass Kunstzähne verwendet werden, die an ihrer Unterseite eine in mesio-distaler Richtung laufende Halterille aufweisen.

Durch die erfindungsgemäße Gestaltung der Unterseite wird eine eindeutige und stabile Positionierung und Fixierung des Zahns in dem Aufnahmebett erreicht. Der Zahn ist gegenüber Verschiebungen, insbesondere in bukkaler/labialer bzw. dazu entgegengesetzter Richtung besser gesichert. Üblicherweise ist die Unterseite der Kunstzähne nicht lotrecht zu einer von oben einwirkenden Kaukraft, sondern ist nach außen zur bukkalen/labialen Seite hin geneigt. Da die Unterseite somit eine "schiefe Ebene" bildet, entsteht unter der Einwirkung der Kaukraft eine nach bukkal/labial gerichtete Seitenkraft, die den Zahn in horizontaler Richtung zu verschieben sucht. Die erfindungsgemäße Halterille sichert den Kunstzahn gegenüber einer solchen unerwünschten Verschiebung. Der Gefahr, dass sich bei der Wachseinprobe der Zahnprothese am Patienten der Kunstzahn unter der Einwirkung der Kaukraft verschiebt, wird damit auf effektive Weise entgegengewirkt. Dank dieser erfindungsgemäßen Gestaltung wird gewährleistet, dass die Kunstzähne beim Entnehmen der Prothese nach der Anprobe sich an ihrer anatomisch richtigen Position befinden, und zwar auch dann, wenn die Prothese hohen Kaukräften ausgesetzt worden ist. Diese hohe Positionierungsgenauigkeit ist Voraussetzung dafür, dass die Kunstzähne positionsrichtig durch das Dubliermedium gehalten werden können und somit ihre anatomisch richtige Position auch dann beibehalten, wenn das Aufnahmebett entfernt wird und statt dessen das endgültige Fixierungsmaterial eingebracht wird, in das die Kunstzähne mit ihrer Unterseite eingebettet werden.

Der Kern der Erfindung liegt darin, die Kunstzähne gegenüber unerwünschten Verdrehungen in dem Aufnahmebett weitgehend zu schützen. Insgesamt ergibt sich somit sowohl ein vereinfachtes Einsetzen des Kunstzahns in das Aufnahmebett wie auch eine wesentlich sichere Halterung des eingesetzten Zahns in das Bett. Dadurch erhöht sich die Dimensionstreue der Prothese insgesamt sowohl vor, während und auch nach der Wachsanprobe. Darüber hinaus erleichtert die erfindungsgemäße Rille auch ein positionsgenaues Wiedereinsetzen des Zahns, wenn dieser bei der Einprobe herausgebrochen ist. Damit schafft die Erfindung den Grundstein dafür, bei der nachfolgenden Weiterverarbeitung einen Zahnersatz herzustellen, bei dem sich die Kunstzähne mit einem hohen Grad an Genauigkeit an anatomisch richtiger Position befinden. Die Erfindung beruht auf der Erkenntnis, dass bei den herkömmlicherweise verwendeten Herstellungsverfahren zwar die Schritte des Herstellens der Negativform und Einbringen des Fixierungsmittels mit hoher Genauigkeit erfolgten, aber bei der am Anfang stehenden Wachsanprobe insbesondere auf Grund von bei der Beißprobe auftretenden Kaukräften es zu unerwünschten Verschiebungen des Kunstzahn in dem Aufnahmebett kam. Diese Fehler haben sich dann durch die weitere Verarbeitung unkorrigiert durchgezogen, so dass der endgültig hergestellte Zahnersatz entsprechend fehlerhaft war. Dies zu vermeiden ist der Verdienst der Erfindung.

Die Erfindung erstreckt sich auch auf einen entsprechenden Kunstzahn für Zahnprothesen mit einer als Bissfläche ausgebildeten Oberseite und einer Unterseite zum Einsetzen in ein Aufnahmebett der Zahnprothese, wobei an der Unterseite des Kunstzahns mindestens eine in mesio-distale Richtung laufende Halterille ausgebildet ist.

Der erfindungsgemäße Kunstzahn kann sowohl als Backen- wie auch als Frontzahn ausgebildet sein. Je nach dem ist die Bissfläche zum Kauen flächenmäßig ausgedehnt oder zum Abbeißen spitzenartig geformt.

Erfindungsgemäß ist an der Unterseite ein Verdrängungsraum von einem umlaufenden Rand gebildet, in dem die Halterille ausgeformt ist. Der Rand verbessert die Positionierungsgenauigkeit des Zahns in dem Zahnbett und verdrängt beim Einsetzen Wachs in den von ihm umschlossenen Verdrängungsraum. Im eingesetzten Zustand ist der Verdrängungsraum dadurch weitgehend mit Wachs gefüllt. Dies sorgt in Verbindung mit der in dem Rand ausgeformten erfindungsgemäßen Rille für eine noch bessere Positionierungssicherheit des Zahns in dem Aufnahmebett. Vorzugsweise ist die Rille dabei ausschließlich in dem überstehenden Rand ausgebildet. Dadurch ist sichergestellt, dass sich die Rille beim Einsetzen des Kunstzahns in das Aufnahmebett mit Wachs füllt, so dass die Sicherungsfunktion ausgeübt wird. Es soll aber nicht ausgeschlossen sein, dass die Rille sich über den Bereich des überstehenden Rands hinaus in die Unterseite erstreckt. Dies kann insbesondere dann von Vorteil sein, wenn der Zahn verhältnismäßig großen Belastungen ausgesetzt ist und daher tief in das Aufnahmebett einzusetzen ist.

Erfindungsgemäß ist zur Vermeidung von Belastungsspitzen der Übergang zwischen der Unterseite und der Rille verrundet ausgeführt. Diese Formgebung stellt sicher, dass beim Einsetzen des Kunstzahns in das Aufnahmebett ausreichend Wachsmaterial in die Rille eindringt, und zwar ohne die Gefahr, dass dabei durch Lastkonzentrationen im Eckbereich Rissbildung auftritt.

Bei einer zweckmäßigen Ausführungsform weist die Rille einen halbkreisförmigen Querschnitt auf. Diese Querschnittsform ist rationell herzustellen und vermeidet durch ihre innere runde Gestalt das Auftreten von Lastspitzen. Eine Schwächung der Struktur des Kunstzahns kann dadurch vermieden werden. Es können aber alternativ auch andere Querschnittsformen vorgesehen sein. Beispielsweise kann die Rille auch einen rechteckigen Querschnitt aufweisen. Dieser hat aufgrund seiner steilstehenden Flanken den Vorteil, dass er eine besonders hohe Verschiebungs- und Drehungssicherheit bietet. Das Auftreten unerwünschter Belastungsspitzen wird durch die Verrundung der Ecken weitgehend verhindert.

Bei einer bewährten Ausführungsform ist parallel mindestens eine weitere Halterille angeordnet. Damit kann eine Mehrfachrille gebildet sein, die zur weiteren Erhöhung der Befestigungssicherheit beiträgt.

Die Oberseite des erfindungsgemäßen Kunstzahns ist je nach seiner Ausgestaltung als Backen- oder als Frontzahn flächenmäßig erstreckt oder eher spitzenartig geformt. Die Halterille ist vorzugsweise so unter der Oberseite angeordnet, dass sie sich lotrecht unterhalb des Flächenschwerpunkts der Oberseite befindet. Hierbei ist die Richtung des Lots durch die Richtung der von dem Zahn aufzubringenden Kaukraft definiert. Diese Anordnung wird dadurch erreicht, dass der Kunstzahn auch bei hohen Kaukräften nicht aus seiner Position herauskippt, wodurch die Halterille den Kontakt zu dem Aufnahmebett verlieren könnte. Der erfindungsgemäße Kunstzahn ist damit auch bei hohen Belastungen sicher in dem Aufnahmebett gehalten.

Die Erfindung wird nachfolgend in Bezug auf die Zeichnungen erläutert, in der vorteilhafte Ausführungsbeispiele dargestellt sind. Es zeigen:
- Fig. 1: Querschnittsdarstellungen verschiedener Stufen bei einer Herstellung einer erfindungsgemäßen Zahnersatzprothese;
- Fig. 2: eine perspektivische Ansicht eines ersten Ausführungsbeispiels eines erfindungsgemäßen Kunstzahns von schräg unten;
- Fig. 3: einen Schnitt durch eine Zahnprothese, in die der erfindungsgemäße Kunstzahn nach Fig. 1 eingesetzt ist; und
- Fig. 4: einen Schnitt durch eine Zahnprothese, in die ein Kunstzahn gemäß einem zweiten Ausführungsbeispiel eingesetzt ist.

Ein in seiner Gesamtheit mit dem Bezugszeichen 1 versehener Kunstzahn weist eine Oberseite 11, eine Unterseite 12 sowie mehrere Seitenflächen auf. Der Kunstzahn 1 ist aus einem festen und bioverträglichen Material hergestellt, beispielsweise Polymethylmethacrylat (PMMA). Es können aber auch andere für die Verwendung als Kunstzahn geeignete Materialien verwendet werden, insbesondere Nichtmetalle wie beispielsweise Keramik oder dergleichen, aber auch Metalle wie Gold oder dergleichen.

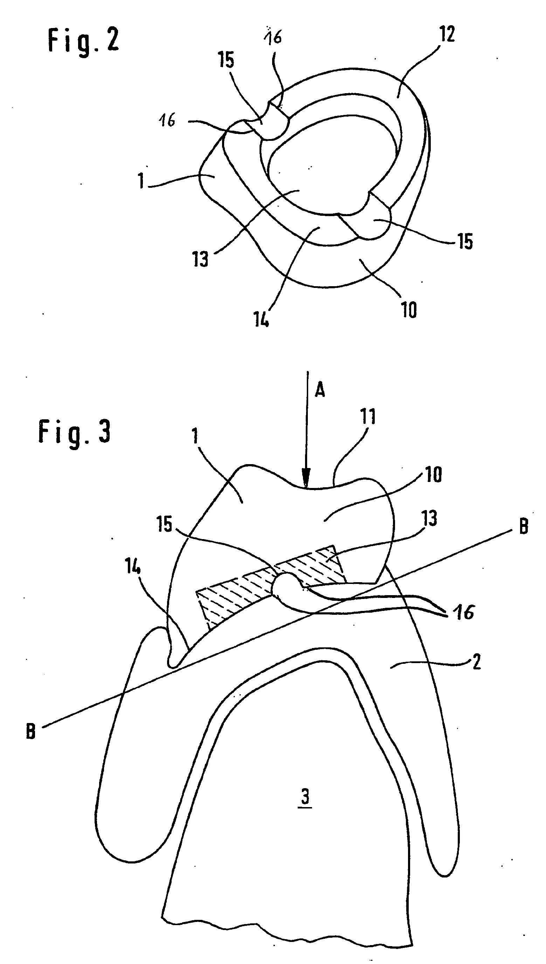

Der Kunstzahn 1 weist an seiner Unterseite 12 einen umlaufenden Rand 14 auf. Dieser umgrenzt einen Verdrängungsraum 13, der in dem dargestellten Ausführungsbeispiel vollständig von dem umlaufenden Rand 14 umschlossen ist. Der Verdrängungsraum 13 weist einen planen Grund auf. Er bildet zusammen mit der Oberfläche des Rands 14 die Unterseite 12 des Kunstzahns 1. Die Unterseite 12 ist gegenüber der Oberseite 11 geneigt, so dass die Höhe des Zahns in bukkaler/labialer Richtung hin zunimmt. Dadurch ergibt sich an der Unterseite 12 des Kunstzahns 1 eine "schiefe Ebene". Sie ist in Fig. 3 als Linie B-B dargestellt.

In dem Rand 14 ist eine Halterille 15 ausgebildet. In dem dargestellten Ausführungsbeispiel ist sie im Querschnitt von einer halbkreisförmigen Gestalt. Der Durchmesser der Halterille 15 ist so bemessen, dass sie auch an ihrem tiefsten Punkt nicht in den Grund des Verdrängungsraums 13 schneidet. Im dargestellten Ausführungsbeispiel beträgt das Verhältnis zwischen dem Durchmesser der Halterille 15 und der Höhe des Rands 14 etwa zwei zu drei. In dem dargestellten Ausführungsbeispiel sind die beiden halbkreisförmigen Vertiefungen der Halterille in dem Rand 14 in einer Flucht angeordnet. Dies ist eine aus produktionstechnischer Sicht vorteilhafte Anordnung; sie ist allerdings nicht unbedingt erforderlich, die Halterillen 15 können auch versetzt zueinander angeordnet sein. Der Übergangsbereich 16 zwischen der Halterille 15 und der Oberfläche des Rands 14 ist ausgerundet. Das hat den Vorteil, dass beim Einsetzen des Kunstzahns 1 in ein Aufnahmebett 2 die Gefahr, dass sich im Wachsmaterial des Aufnahmebetts 2 in diesem Bereich Risse bilden, verringert ist.

Der erfindungsgemäße Kunstzahn 1 im in das Aufnahmebett 2 eingesetzten Zustand ist in Fig. 3 dargestellt. Das Aufnahmebett 2 ist zur leichteren Erkennbarkeit in Schnitt dargestellt. Das Aufnahmebett 2 ist im Querschnitt sattelförmig gestaltet, so dass es auf dem Kieferkamm 3 des Patienten sitzend gehaltert ist. Man erkennt, dass im eingesetzten Zustand der Rand 14 an der Unterseite des Kunstzahns 1 in das Aufnahmebett 2 eindringt. Das Wachsmaterial des Aufnahmebetts 2 dringt in den Verdrängungsraum 13 sowie in die Halterille 15 ein, bis die Halterille 15 beinahe oder vollständig ausgefüllt ist. Das in die Halterille 15 eingedrungene Wachsmaterial sichert so den Kunstzahn 1 gegenüber einer Bewegung in bukkaler (in der Zeichnung links) oder in entgegengesetzter (in der Zeichnung rechts) weisender Richtung. Ferner sichert die Halterille 15 den Kunstzahn 1 gegenüber einem Verdrehen um seine Hochachse (in der Zeichenebene von oben nach unten verlaufend). Die Halterille 15 ist vorzugsweise lotrecht unterhalb des Flächenschwerpunkts der Oberseite 11 angeordnet, wobei die Richtung des Lots durch die Richtung der aufzunehmenden Kaukraft A definiert ist. Dadurch ist der erfindungsgemäße Kunstzahn 1 auch bei hohen Kaukraftbelastungen gegenüber einem Verkippen zur Seite weitgehend geschützt. Die erfindungsgemäße Halterille 15 ist somit auch bei hohen Belastungen sicher im Eingriff mit dem Aufnahmebett 2 und sichert den erfindungsgemäßen Kunstzahn 1 somit gegen unerwünschte seitliche Verschiebungen.

Nachfolgend wird nun die Wirkungsweise der erfindungsgemäßen Halterille 15 erläutert: Wirkt eine Kaukraft A auf die Oberseite 11 des Kunstzahns 1 ein, so besteht die Gefahr, dass aufgrund der Wirkung der schiefen Ebene B-B eine horizontale Kraftkomponente an der Unterseite 12 des Kunstzahns 1 entsteht, die versucht diesen in bukkaler Richtung zu verschieben. Dank der erfindungsgemäß vorgesehenen Halterille 15 und des darin eingedrungenen Wachsmaterials des Aufnahmebetts 2 ist der Kunstzahn 1 gegenüber dieser Verschiebung gesichert. Der Kunstzahn könnte nur dann verschoben werden, wenn der Kunstzahn 1 sich aus seinen in Fig. 3 dargestellten Sitz heraushebt; dem wirkt aber gerade die aufgebrachte Kaukraft A entgegen. Der Kunstzahn 1 sichert sich auf diese Weise auch bei großen Belastungen selbsttätig.

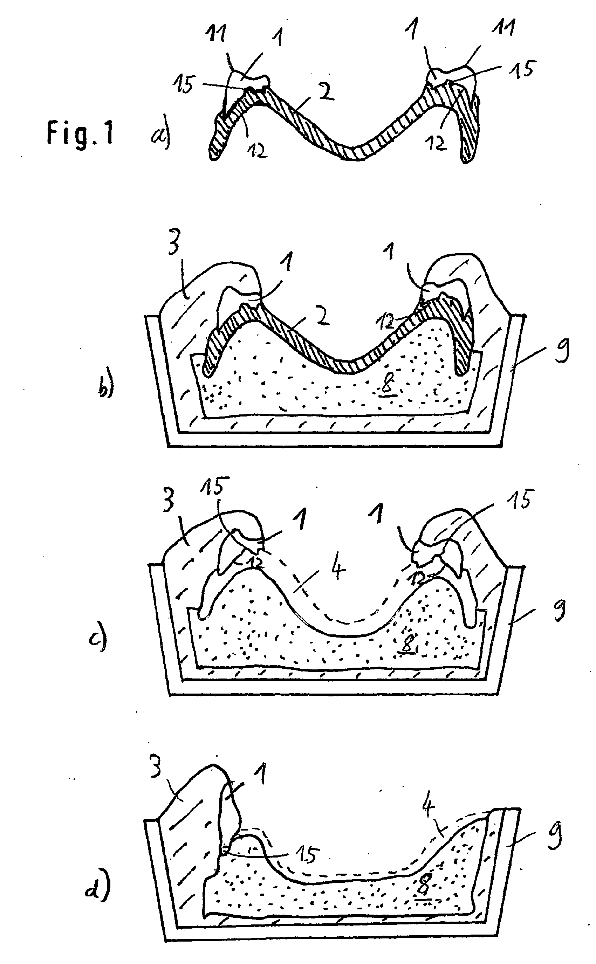

Verschiedene Schritte bei der Herstellung eines Ausführungsbeispiels für die erfindungsgemäße Zahnersatzprothese sind in Fig. 1 dargestellt. Man erkennt in Fig. 1a die vorstehend beschriebene Wachsprothese mit einem Aufnahmebett 2 aus Wachsmaterial und darin eingesetzte Kunstzähne 1. Letztere sind durch ihre an der Unterseite 12 angeordnete Halterille 15 gegenüber einem unbeabsichtigten Verschieben gesichert. Mit dieser Wachsprothese erfolgt ein Anpassen der Prothese am Patienten. Am Ende dieses Schritts steht die anatomisch richtige Aufstellung der Kunstzähne 1 in dem Aufnahmebett 2. Im nächsten Schritt, der in Fig. 1b dargestellt ist, wird eine Negativform hergestellt. Dies geschieht in der Weise, dass die Wachsprothese in ein spezielles Gefäß 9 mit einem Bett aus Formmaterial 8 eingelegt wird, so dass das Aufnahmebett 2 über seine ganze Unterseite durch das Formmaterial 8 unterstützt ist. Weiter wird ein Dubliermedium 3, bspw. Silikon, eingebracht und so geformt, dass sich um den Außenrand der Wachsprothese hinweg ein Wall erstreckt, der die Kunstzähne 1 in sich einbettet. Dabei berührt der Wall nur die Außenseite sowie die Oberseite 11 der Kunstzähne. Die Kunstzähne 1 sind dadurch in dem Dubliermedium 3 eindeutig positioniert, und zwar in der bei der Anprobe ermittelten anatomisch richtigen Lage. In einem nächsten Schritt erfolgt dann das Abbrühen des Wachsmaterials des Aufnahmebetts 2. Es entsteht somit aus dem Dubliermedium 3 und dem Bett aus Formmaterial 8 eine Negativform. Schließlich wird in einem nächsten Schritt Fixierungsmaterial 4 in diese Negativform eingebracht (siehe Fig. 1c). In das Fixierungsmaterial 4 taucht die Unterseite 12 der Kunstzähne ein, wodurch die Kunstzähne 1 in dem Fixierungsmaterial 4 verankert werden. Die Außenseiten und Oberseiten 11 der Kunstzähne 1 sind durch das Dubliermedium 3 vor einer Benetzung durch das Fixiermaterial 4 geschützt. Beim anschließenden Aushärten werden die Kunstzähne 1 fest und positionsgetreu in das Fixiermaterial 4 eingebettet. Damit entsteht die endgültige Zahnersatzprothese, die dann lediglich noch fertig bearbeitet zu werden braucht. In Fig. 1d ist dargestellt, wie das erfindungsgemäße Verfahren durchgeführt wird, wenn der Kunstzahn 1 mit der erfindungsgemäßen Halterille 15 ein Schneidezahn ist. Er wird von dem Dubliermedium 3 an seiner Außenseite sowie inzisal gehalten. Dank der erfindungsgemäßen Halterille 15 ist sichergestellt, dass auch der besonders gegenüber unbeabsichtigten Verschiebungen anfällige Kunstzahn 1 als Schneidezahn sicher in dem zur Anprobe verwendeten Aufnahmebett 2 aus Wachsmaterial gehalten ist, so dass eine anatomisch richtige Positionierung auch in dem Fixiermaterial 4 der endgültigen Zahnersatzprothese erreicht wird.

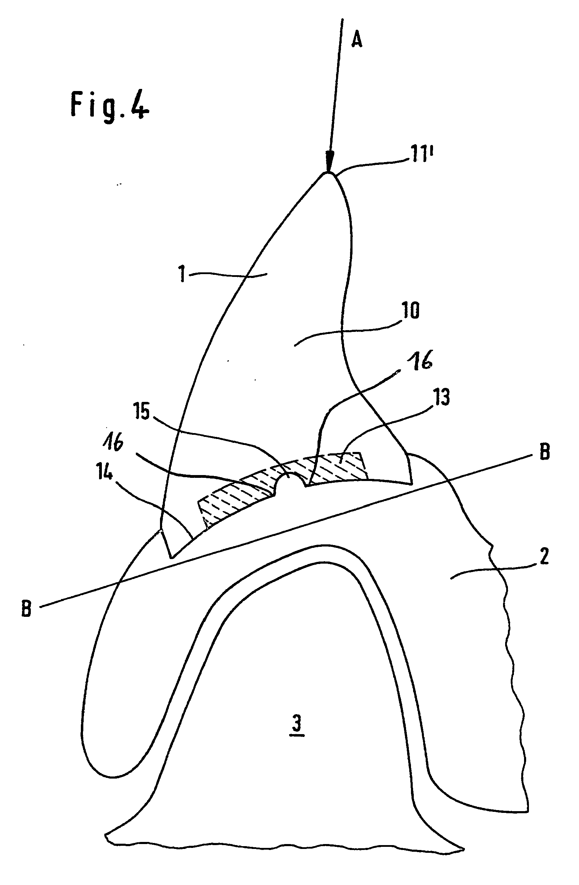

In Fig. 4 ist der Querschnitt durch ein zweites Ausführungsbeispiel des erfindungsgemäßen Kunstzahns 1 dargestellt. Er unterscheidet sich von dem in Fig. 2 dargestellten Ausführungsbeispiel im wesentlichen dadurch, dass es sich bei dem in Fig. 3 dargestellten Ausführungsbeispiel um einen Frontzahn handelt. Nachfolgend wird im wesentlichen auf die Unterschiede zwischen den beiden Ausführungsformen eingegangen; die vorherstehenden Ausführungen zu dem ersten Ausführungsbeispiel gelten im übrigen für das zweite Ausführungsbeispiel sinngemäß. Der Hauptunterschied liegt darin, dass bei dem in Fig. 3 dargestellten zweiten Ausführungsbeispiel anstelle einer flächig ausgedehnten Oberseite 11 eine Schneidkante 11' vorgesehen ist. Die Anordnung der Halterille 15 in Bezug auf die Schneidkante 11 ist so gewählt, dass die Halterille 15 sich etwa in dem auf die Kaukraft A bezogenen Lot der Schneidkante 11' befindet. Dadurch ist sichergestellt, dass auch bei hoher Kaukraft A ein Verkippen des Kunstzahns 1 verhindert werden kann, so dass auch unter solch hoher Belastung der Kunstzahn 1 durch die Halterille 15 sicher in dem Aufnahmebett 2 gehalten ist. Es versteht sich, dass soweit bei den zu dem ersten Ausführungsbeispiel gegebenen Erläuterungen auf eine bukkale Richtung Bezug genommen wurde, bei diesem Ausführungsbeispiel eine labiale Richtung gemeint ist.

## Patentansprüche

1. Kunstzahn für Zahnprothesen mit einer als Bissfläche ausgebildeten Oberseite (11) und einer Unterseite (12), die zum Einsetzen in ein Aufnahmebett (2) der Zahnprothese ausgebildet ist und
an der mindestens eine in mesio-distaler Richtung laufende Halterille (15) ausgebildet ist,
wobei an der Unterseite ein Verdrängungsraum (13) von einem umlaufenden Rand (14) gebildet ist, in dem die Halterille (15) ausgeformt ist, **dadurch gekennzeichnet dass,** im Bereich des Übergangs zwischen Halterille (15) und Unterseite (12) Verrundungen vorgesehen sind.

2. Kunstzahn nach Anspruch 1,
**dadurch gekennzeichnet, dass**
die Unterseite (12) gegenüber der Oberseite (11) geneigt ist, so dass die Höhe des Zahns in bukkaler/labialer Richtung hin zunimmt.

3. Kunstzahn nach Anspruch 1 oder 2,
**dadurch gekennzeichnet, dass**
der Kunstzahn aus einem nicht-metallischen Material hergestellt ist, insbesondere Polymethylmethacrylat.

4. Kunstzahn nach Anspruch 3,
**dadurch gekennzeichnet, dass**
die Halterille (15) ausschließlich in dem Rand (14) ausgebildet ist.

5. Kunstzahn nach einem der Ansprüche 1 bis 4,
**dadurch gekennzeichnet, dass**
die Halterille einen halbkreisförmigen Querschnitt aufweist.

6. Kunstzahn nach einem der Ansprüche 1 bis 5,
**dadurch gekennzeichnet, dass**
die Halterille (15) einen rechteckförmigen Querschnitt aufweist.

7. Kunstzahn nach einem der Ansprüche 1 bis 6,
**dadurch gekennzeichnet, dass**
parallel mindestens eine weitere Halterille angeordnet ist.

8. Kunstzahn nach einem der Ansprüche 1 bis 7,
**dadurch gekennzeichnet, dass**
die Halterille (15) lotrecht unterhalb eines Flächenschwerpunkts der Oberseite angeordnet ist,
wobei die Richtung des Lots durch eine Kaukraft (A) definiert ist.

9. Verfahren zum Herstellen einer Zahnprothese mit den Schritten
Herstellen einer Wachsprothese umfassend Kunstzähne (1) und ein Aufnahmebett (2) zur Aufstellung der Kunstzähne (1) durch Einsetzen der Kunstzähne (1) in das Aufnahmebett (2) an anatomisch richtiger Position,
Herstellen einer Negativform (8) der Wachsprothese mittels eines Dubliermediums (3), das zur positionswahrenden Aufnahme der Kunstzähne (1) ausgebildet ist,
Entfernen des Aufnahmebetts (2),
Einbringen eines Fixierungsmaterials (4) in die Negativform (8),
Aushärten des Fixierungsmaterials (4), wobei die Kunstzähne (1) mit ihrer Unterseite (12) in das Fixierungsmaterial (4) dauerhaft eingebettet werden,
**gekennzeichnet durch**,
Verwenden von Kunstzähnen (1), die an ihrer Unterseite (12) eine in mesio-distaler Richtung laufende Halterille (15) aufweisen, wobei an der Unterseite ein Verdrängungsraum (13) von einem umlaufenden Rand (14) gebildet ist, in dem die Halterille (15) ausgeformt ist,
und Verrunden des Übergangsbereichs zwischen Halterille (15) und Unterseite (12).

10. Verfahren nach Anspruch 9,
**gekennzeichnet durch**,
Verwenden eines Kunstzahns nach einem der Ansprüche 2 bis 8.

## Claims

1. Artificial tooth for dental prostheses, having a top side (11), designed as a biting surface, and an underside (12), which is designed for insertion into a receiving bed (2) of the dental prosthesis, and
on which at least one holding groove (15), which runs in the mesio-distal direction, is formed, a displacement space (13) being formed on the underside by an encircling rim (14) in which the holding groove (15) is formed,
**characterized in that**
rounded portions are provided in the region of the transition between holding groove (15) and underside (12).

2. Artificial tooth according to Claim 1,
**characterized in that**
the underside (12) is inclined with respect to the top side (11), such that the height of the tooth increases in the buccolabial direction.

3. Artificial tooth according to Claim 1 or 2,
**characterized in that**
the artificial tooth is made from a non-metallic material, in particular polymethyl methacrylate.

4. Artificial tooth according to Claim 3,
**characterized in that**
the holding groove (15) is formed exclusively in the rim (14).

5. Artificial tooth according to one of Claims 1 to 4,
**characterized in that**
the holding groove is semicircular in cross section.

6. Artificial tooth according to one of Claims 1 to 5,
**characterized in that**
the holding groove (15) is rectangular in cross section.

7. Artificial tooth according to one of Claims 1 to 6,
**characterized in that**
at least one further holding groove is arranged parallel.

8. Artificial tooth according to one of Claims 1 to 7,
**characterized in that**
the holding groove (15) is arranged vertically below a surface centre of gravity of the top side, the direction of the vertical being defined by a mastication force (A).

9. Process for producing a dental prosthesis, comprising the steps of
producing a wax prosthesis comprising artificial teeth (1) and a receiving bed (2) for articulating the artificial teeth (1) by inserting the artificial teeth (1) into the receiving bed (2) at the anatomically correct position,
producing a negative mould (8) of the wax prosthesis by means of a duplicating medium (3) which is designed to receive the artificial teeth (1) in such a way that they maintain their position,
removing the receiving bed (2),
introducing a fixing material (4) into the negative mould (8),
causing the fixing material (4) to set, so that the underside (12) of the artificial teeth (1) is permanently embedded in the fixing material (4),
**characterized by**
the use of artificial teeth (1) which on their underside (12) have a holding groove (15) running in the mesio-distal direction,
a displacement space (13) being formed on the underside by an encircling rim (14) in which the holding groove (15) is formed,
and rounding of the transition region between holding groove (15) and underside (12).

10. Process according to Claim 9,
**characterized by**
the use of an artificial tooth according to one of Claims 2 to 8.

## Revendications

1. Dent artificielle pour prothèses dentaires, comportant une face supérieure (11), réalisée en forme de surface pour mordre, et une face inférieure (12), qui est réalisée pour être mise en place dans un lit de réception (2) de la prothèse dentaire et
sur laquelle est réalisée au moins une rainure de retenue (15) orientée dans la direction mésio-distale, une chambre de refoulement (13) étant formée sur la face inférieure par un bord (14) périphérique, la rainure de retenue (15) étant ménagée dans celle-ci,
**caractérisée en ce que**
des arrondis sont prévus dans la zone de transition entre la rainure de retenue (15) et la face inférieure (12).

2. Dent artificielle selon la revendication 1,
**caractérisée en ce que**
la face inférieure (12) est inclinée par rapport à la face supérieure (11), de telle sorte que la hauteur de la dent augmente dans la direction bucco-labiale.

3. Dent artificielle selon la revendication 1 ou 2,
**caractérisée en ce que**
la dent artificielle est réalisée dans un matériau non métallique, en particulier en polyméthylméthacrylate.

4. Dent artificielle selon la revendication 3,
**caractérisée en ce que**
la rainure de retenue (15) est ménagée exclusivement dans le bord (14).

5. Dent artificielle selon l'une quelconque des revendications 1 à 4,
**caractérisée en ce que**
la rainure de retenue a une section semi-sphérique.

6. Dent artificielle selon l'une quelconque des revendications 1 à 5,
**caractérisée en ce que**
la rainure de retenue (15) a une section rectangulaire.

7. Dent artificielle selon l'une quelconque des revendications 1 à 6,
**caractérisée en ce**
**qu'**au moins une autre rainure de retenue est agencée parallèlement.

8. Dent artificielle selon l'une quelconque des revendications 1 à 7,
**caractérisée en ce que**
la rainure de retenue (15) est agencée verticalement en dessous d'un centre de gravité plan de la face supérieure, la direction de la verticale étant définie par la force de mastication (A).

9. Procédé de réalisation d'une prothèse dentaire, comportant les étape:
réalisation d'une prothèse en cire comportant des dents artificielles (1) et un lit de réception (2) pour le positionnement des dents artificielles (1) par la mise en place des dents artificielles (1) au bon emplacement anatomique dans le lit de réception (2),
réalisation d'une forme négative (8) de la prothèse en cire au moyen d'un produit de doublage (3), qui est réalisé pour recevoir les dents artificielles (1) et les maintenir dans leur position,
enlèvement du lit de réception (2),
introduction d'un matériau de fixation (4) dans la forme négative (8),
durcissement du matériau de fixation (4), les dents artificielles (1) étant incorporées durablement avec leur face inférieure (12) dans le matériau de fixation (4),
**caractérisé par**
l'utilisation de dents artificielles (1), dont la face inférieure (12) comporte une rainure de retenue (15) orientée dans la direction mésio-distale, une chambre de refoulement (13) étant formée sur la face inférieure par un bord (14) périphérique, la rainure de retenue (15) étant ménagée dans celle-ci,
et un arrondissement de la zone de transition entre la rainure de retenue (15) et la face inférieure (12).

10. Procédé selon la revendication 9,
**caractérisé par**
l'utilisation d'une dent artificielle selon l'une quelconque des revendications 2 à 8.
